Europäisches Patentamt

European Patent Office

Office européen des brevets

(19)

(11) Veröffentlichungsnummer: **0 124 069**
**A2**

# EUROPÄISCHE PATENTANMELDUNG

(12)

(21) Anmeldenummer: **84104606.3**

(22) Anmeldetag: **25.04.84**

(51) Int. Cl.³: **B 60 K 5/12, F 16 F 1/36**

(30) Priorität: **29.04.83 DE 3315566**

(43) Veröffentlichungstag der Anmeldung: **07.11.84**
Patentblatt 84/45

(84) Benannte Vertragsstaaten: **DE FR GB IT SE**

(71) Anmelder: **METZELER KAUTSCHUK GMBH,**
Gneisenaustrasse 15, D-8000 München 50 (DE)

(72) Erfinder: **Härtel, Volker, Dr., Fichtenstrasse 50,**
D-8034 Germering (DE)

(74) Vertreter: **Michelis, Theodor, Dipl.-Ing.,**
Gneisenaustrasse 15, D-8000 München 50 (DE)

(54) **Lagerelement, insbesondere zur Lagerung des Motors eines Kraftfahrzeugs.**

(57) Ein Lagerelement, insbesondere für die Lagerung des Motors eines Kraftfahrzeuges, weist Anschlußstücke für das Tragteil bzw. das zu lagernde Teil sowie einen zwischen den beiden Anschlußstücken angeordneten Körper aus elastomerem Material, insbesondere Gummi, auf; der in den Elastomerkörper eingebettete Endbereich mindestens eines Anschlußstückes ist als Wellenleiter mit sich kontinuierlich verringernder Querschnittsfläche ausgebildet, wobei der viskoelastische, elastomere Werkstoff selbst als dämpfendes Material für diese Endbereiche dient. Dadurch zeigen solche Lagerelemente auch bei Frequenzen von mehr als 400 Hz noch ein akustisch befriedigendes Verhalten.

ACTORUM AG

0124069

METZELER KAUTSCHUK GMBH

München

München, den 17.4.1984

MK 323 P 83 EP

Lagerelement, insbesondere zur Lagerung des Motors eines Kraftfahrzeugs

Die Erfindung betrifft ein Lagerelement, insbesondere zur Lagerung des Motors eines Kraftfahrzeuges, der im Oberbegriff des Anspruchs 1 angegebenen Gattung.

Solche Lagerelemente aus elastomeren Werkstoffen werden insbesondere als Motorenlager für die Schwingungsisolation und für die Verringerung der Übertragung des Körperschalls vom Motor auf die Karosserie eingesetzt. Die Schalldämpfung solcher Lagerelemente liefert bis zu Frequenzen von einigen 100 Hz befriedigende Werte und wird im wesentlichen durch die komplexe Steifigkeit des verwendeten, elastomeren Werkstoffes bestimmt.

Bei höheren Frequenzen ergeben sich jedoch Dämmungseinbrüche aufgrund der Eigenresonanz der Elastomerkörper und/oder der bei der Konstruktion der Lagerelemente verwendeten Anschlußstücke, die gleichzeitig auch als Befestigungselemente dienen, wie beispielsweise Metallbleche, Flansche, Lagerbügel usw. Die Resonanzen des Elastomerkörpers selbst werden durch seine Geometrie, sein spezifisches Gewicht sowie den komplexen Modul des elastomeren Werkstoffes, im allgemeinen Gummi, definiert.

Die störenden Eigenresonanzen der anvulkanisierten Anschluß- und Zwischenstücke lassen sich meist nur durch Verrippung oder Verstärkung vermeiden bzw. zu höheren Frequenzen hin verschieben. Diese Maßnahmen führen jedoch zu einer unerwünschten Erhöhung von Gewicht und/oder Preis solcher Lagerelemente.

Es ist deshalb ein Ziel der vorliegenden Erfindung, ein Lagerelement  der angegebenen Gattung zu schaffen, bei dem die oben erwähnten Nachteile nicht auftreten.

Insbesondere soll ein leichtes und preiswertes Lagerelement der angegebenen Gattung geschaffen werden, das auch bei Frequenzen über 400 Hz noch ein akustisch befriedigendes Verhalten zeigt.

Dies wird erfindungsgemäß durch die im kennzeichnenden Teil des Anspruchs 1 angegebenen Merkmale erreicht.

Zweckmäßige Ausführungsformen sind in den Unteransprüchen zusammengestellt.

Die mit der Erfindung erzielten Vorteile beruhen auf folgender Funktionsweise: Mindestens eins der beiden Anschlußstücke, für die im allgemeinen Bleche verwendet werden, der Lagerelemente ist mit langen, rechteckigen Blechstreifen versehen, deren Querschnittsfläche sich zum Ende hin verjüngt; gute Ergebnisse werden mit plattenförmigen Endbereichen mit Dreieck- oder Hornform erhalten.

Diese Blechstreifen wirken als Wellenleiter für eingeleiteten Körperschall höherer Frequenz, so daß die entsprechenden Schwingungen von diesen Endbereichen aufgenommen werden.

Die verjüngten Endbereiche der Anschlußstücke sind mit einem reflexionsfreien oder reflexionsarmen Abschluß in Form einer Dämpfungsstrecke versehen, wobei das viskoelastische, elastomere Material des Elastomerkörpers selbst als dämpfendes Material dient; dieses elastomere Material ist mit den Wellenleitern durch direkte Vulkanisation über ein Haftsystem verbunden.

Die an den Anschlußstücken vorgesehenen, als Wellenleiter dienenden Blechstreifen werden so gefaltet, gebogen oder zurückgeführt, daß zumindest das verjüngte Ende des Wellenleiters in den elastomeren Werkstoff eingebettet ist. Im allgemeinen befindet sich jedoch der gesamte Wellenleiter in dem Elastomerkörper.

Werden Schwingungen vom Motor in das zugehörige Anschlußstück eingeleitet, so wird in dem Wellenleiter und insbesondere in seinem Endbereich eine Transversal- und/oder Longitudinalwelle induziert. Die zugehörige Schwingungsenergie wird dem zu dämpfenden Bauteil, also beispielsweise dem Motor des Kraftfahrzeuges, entzogen und in dem Elastomerkörper verbraucht, wodurch sich die gewünschte Schalldämpfung auch bei Frequenzen von mehr als 400 Hz ergibt.

Die Erfindung wird im folgenden anhand von Ausführungsbeispielen unter Bezugnahme auf die beiliegenden, schematischen Zeichnungen näher erläutert. Es zeigen

Fig. 1 einen seitlichen Schnitt durch ein Lagerelement,

Fig. 2 eine Draufsicht auf ein Anschlußstück, und zwar im eingeklappten bzw. ausgeklappten Zustand,

Fig. 3 eine seitliche Ansicht einer weiteren Ausführungsform eines Lagerelementes,

Fig. 4 eine Draufsicht auf ein Anschlußstück des Lagerelementes nach Fig. 3, und zwar im eingeklappten bzw. ausgeklappten Zustand, und

Fig. 5 einen seitlichen Schnitt einer Modifikation der Ausführungsform nach Fig. 3.

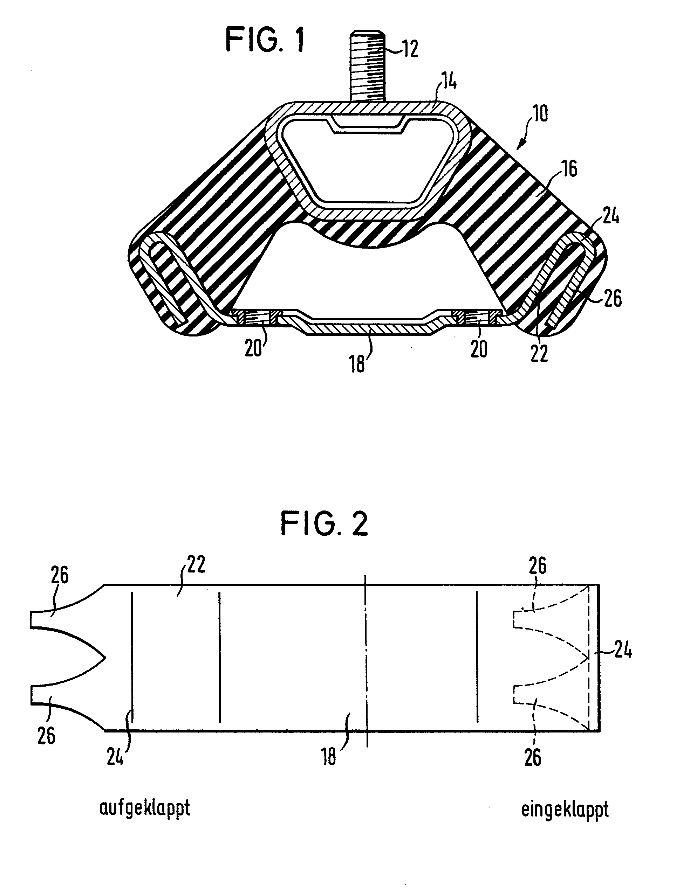

Fig. 1 zeigt ein allgemein durch das Bezugszeichen 10 angedeutetes Keillager mit einer oberen Anschlußachse 12 und einem damit verbundenen, hohlen Tragteil 14 aus Metall. An die beiden Seitenflächen und die Bodenfläche des Tragteils 14 ist ein Körper 16 aus elastomerem Material, insbesondere Gummi, anvulkanisiert, wodurch sich im seitlichen Schnitt die aus Fig. 1 ersichtliche Keilform ergibt.

Das untere Anschlußstück 18 ist als flaches Blech mit Befestigungsöffnungen 20 ausgebildet. Im Endbereich ist das flache Blech 18 zunächst in einem Winkel von etwa 45° nach oben gebogen, wodurch Schenkel 22 entstehen. Die Endbereiche dieser Schenkel 22 sind dann in einem Winkel von 180° nach unten gebogen, so daß die Enden 26 parallel zu den Schenkeln 22 verlaufen. Der gewölbte Übergangsbereich zwischen den Schenkeln 22 und den Enden 26 ist durch das Bezugszeichen 24 angedeutet.

Wie man aus Fig. 2 erkennt, kann das Blech-Anschlußstück 18 als rechteckige Platte mit zwei etwa hornförmig zulaufenden Enden 26 auf jeder Seite ausgebildet werden. Diese Ende 26 werden dann um die Knicklinie 24 nach innen gebogen, wie auf der rechten Seite von Fig. 2 angedeutet ist.

Das Anschlußstück 18 geht also direkt in die eigentlichen Absorberteile 22, 24 und 26 über, die auf allen Seiten durch den elastomeren Werkstoff 16 umgeben sind, also vollständig in den Elastomerkörper 16 eingebettet u. einvulkanisiert sind.

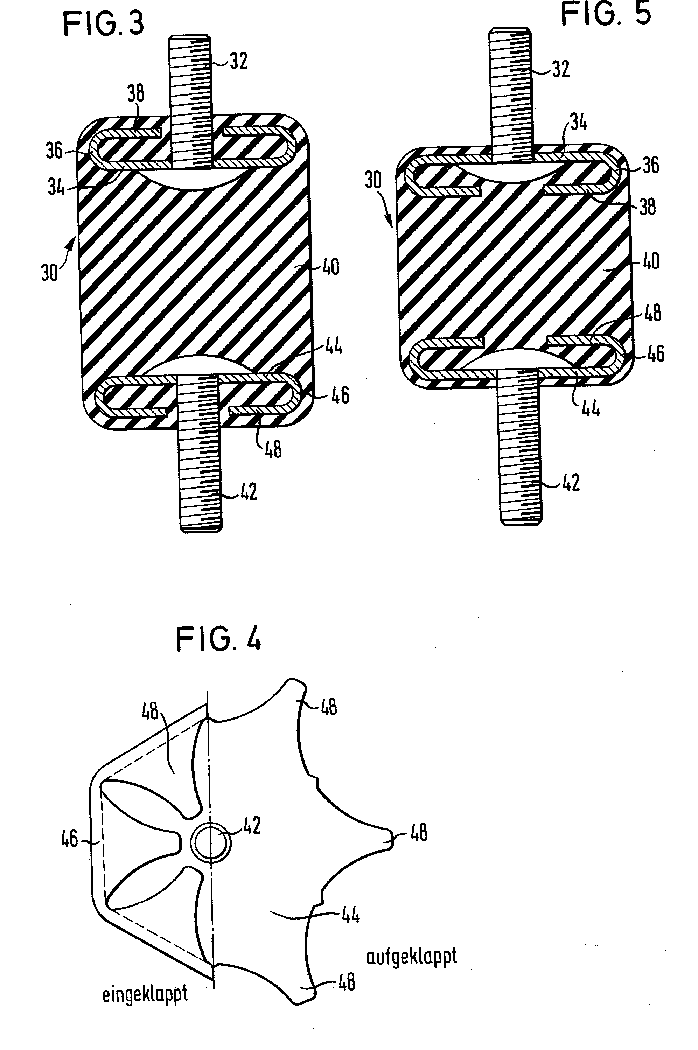

Fig. 3 zeigt eine allgemein durch das Bezugszeichen 30 angedeutete Ausführungsform eines Rundlagers mit einer oberen Anschlußachse 32 und einer unteren Anschlußachse 42, die über einen Elastomerkörper 40 miteinander verbunden sind.

An dem unteren Ende der oberen Anschlußachse 32 bzw. an dem oberen Ende der unteren Abschlußachse 42 sind Wellenleiter befestigt, die im aufgeklappten Zustand in der Draufsicht etwa Blütenform haben, wie man in Fig. 4 erkennt, d.h., die Seiten eines regelmäßigen Vielecks sind mit hornförmig nach außen ragenden Enden 48 versehen. Diese Enden 48 werden um 180° zurückgebogen und verlaufen damit parallel zur Fläche des Vielecks, wie man aus den Figuren 3 und 4 erkennt. Der Übergangsbereich ist durch das Bezugszeichen 46 angedeutet.

In entsprechender Weise ist der obere, mit der Anschlußachse 32 verbundene Wellenleiter mit den Teilen 34, 36 und 38 ausgebildet.

Bei der Ausführungsform nach Fig. 3 sind die umgebogenen Enden 38 bzw. 48 vom Elastomerkörper 40 weggewandt, liegen also direkt an der Außenseite des Elastomerkörpers 40; der gesamte Wellenleiter mit seinen Teilen 34, 36 bzw. 38 oder 44, 46 bzw. 48 ist jedoch vollständig in den Elastomerkörper 40 eingebettet und einvulkanisiert.

Fig. 5 zeigt eine Modifikation dieser Ausführungsform, wobei die umgebogenen Enden 38 bzw. 48 der Wellenleiter zum Elastomerkörper 40 hin gewandt sind. Dadurch kann die Gesamthöhe des Elastomerkörpers 40 verringert werden, wie sich aus einem Vergleich zwischen den Figuren 3 und 5 ergibt.

Die Befestigung zwischen den Anschlußachsen 32 bzw. 42 einerseits und den Wellenleitern andererseits kann durch Schweißen, Nieten oder Schrauben erfolgen, wie in den Figuren 3 und 5 angedeutet ist.

Als Alternative zu den dargestellten Wellenleitern mit den hornförmigen Endbereichen können bei einem Rundlager auch gewendelte Endbereiche verwendet werden. Diese Ausgestaltung hat den Vorteil, daß der Körperschall mehrere Freiheitsgrade des Wellenleiters anregen und damit in mehreren Richtungen bedämpft werden kann.

Details des Aufbaus und der Funktionsweise solcher Wellenleiter können dem Artikel "Schwingungsabsorber zur Reduzierung des Maschinenlärms", veröffentlicht in "VDI-Z" 121 (1979) Nr. 6, Seite 253/261, entnommen werden.

0124069

METZELER KAUTSCHUK GMBH
München

MK 323 P 83 EP


Patentansprüche


1. Lagerelement, insbesondere zur Lagerung des Motors eines Kraftfahrzeuges,

a) mit einem ersten Anschlußstück für ein Tragteil,

b) mit einem zweiten Anschlußstück für das zu lagernde Teil, und

c) mit einem Elastomerkörper zwischen den beiden Anschlußstücken,

d a d u r c h   g e k e n n z e i c h n e t,   daß

d) der in den Elastomerkörper (16, 40) eingebettete Endbereich (22, 24, 26; 44, 46, 48) mindestens eines Anschlußstückes (18; 42) als Wellenleiter mit sich kontinuierlich verringernder Querschnittsfläche ausgebildet ist.


2. Lagerelement nach Anspruch 1, dadurch gekennzeichnet, daß die Endbereiche als Blechstreifen (26; 48) ausgebildet sind.


3. Lagerelement nach einem der Ansprüche 1 oder 2, dadurch gekennzeichnet, daß die plattenförmigen Endbereiche (26; 48) sich zum Ende hin verjüngen.


4. Lagerelement nach Anspruch 3, dadurch gekennzeichnet, daß die plattenförmigen Endbereiche (26; 48) Dreieck- oder Hornform haben.


5. Lagerelement nach einem der Ansprüche 1 bis 4, dadurch gekennzeichnet, daß die Endbereiche (26; 48) um näherungsweise 180° umgebogen oder in sich zurückgehend ausgeführt sind.

6. Lagerelement nach Anspruch 5, dadurch gekennzeichnet, daß ein etwa rechteckiges Anschlußstück(18) an jedem Ende mindestens zwei, um 180° zurückgebogene Endbereiche (26) mit Dreieck- oder Hornform aufweist.

7. Lagerelement nach einem der Ansprüche 1 bis 5, dadurch gekennzeichnet, daß ein Anschlußstück in Form eines regelmäßigen Vielecks an jeder Seite einen um 180° umgebogenen Endbereich (48) aufweist.

## FIG. 1

12
14
10
16
24
26
20
18
20
22

## FIG. 2

26
22
26
26
24
24
26
18
26

aufgeklappt                    eingeklappt

FIG.3

32

38

36

34

30

40

44

46

48

42

FIG. 5

32

34

30

36

38

40

48

46

44

42

FIG. 4

48

48

46

42

48

44

48

eingeklappt

aufgeklappt